Europäisches Patentamt

European Patent Office

Office européen des brevets

(19)

(11) Veröffentlichungsnummer: **0 100 497**
**B1**

(12) **EUROPÄISCHE PATENTSCHRIFT**

(45) Veröffentlichungstag der Patentschrift:
04.01.89

(21) Anmeldenummer: 83107215.2

(22) Anmeldetag: 22.07.83

(51) Int. Cl.⁴: **C 08 G  6/02,** C 08 G  12/12,
C 09 J  3/06, C 09 J  3/16

(54) Verfahren zur Herstellung von Mischkondensaten und deren Verwendung.

(30) Priorität: 31.07.82  DE 3228667

(43) Veröffentlichungstag der Anmeldung:
15.02.84 Patentblatt 84/7

(45) Bekanntmachung des Hinweises auf die Patenterteilung:
04.01.89 Patentblatt 89/1

(84) Benannte Vertragsstaaten:
AT BE CH DE FR GB IT LI NL SE

(56) Entgegenhaltungen:
EP-A-0 066 056
DE-B-1 247 017
DE-B-2 340 509
DE-C-912 398
US-A-2 389 682
US-A-3 359 223

(73) Patentinhaber: BASF Aktiengesellschaft, Carl-
Bosch- Strasse 38, D-6700 Ludwigshafen (DE)

(72) Erfinder: Hummerich, Rainer, Dr., Grosser
Riedweg 17, D-6520 Worms 27 (DE)
Erfinder: Goeckel, Ulrich, Dr., Bruesseler Ring 4,
D-6700 Ludwigshafen (DE)
Erfinder: Rockstroh, Hermann, Weisenheimer
Strasse 28, D-6701 Maxdorf (DE)
Erfinder: Schmidt, Hans Juergen,
Kopernikusstrasse 97, D-6700 Ludwigshafen (DE)
Erfinder: Lehnerer, Wolfgang, Dr., Brunckstrasse
23, D-6710 Frankenthal (DE)

**Beschreibung**

Es ist bekannt, daß man durch Mischen von alkalisch aufgeschlossener Stärke mit Harnstoff-Formaldehyd-Harzen (z. B. gemäß DE-AS-2 340 509) oder mit Ketonformaldehyd-Harzen (z. B. US-PS-2 626 934 und US-PS-3 591 534) naßfeste Klebstoffe erhält, die zum Verkleben von Papier und Pappe verwendet werden. Für diesen Anwendungszweck ist es aus der FR-PS-1 387 038 bekannt, Mischkondensate einzusetzen, die durch gemeinsame Kondensation von Aceton, Harnstoff und Formaldehyd erhalten werden. Die bekannten naßfesten Klebstoffe haben jedoch verschiedene Nachteile, die in den Eigenschaften der Harzkomponente der Klebstoffe zu suchen sind. So haben beispielsweise Harnstoff-Formaldehyd-Harze nur eine begrenzte Lagerstabilität und eine begrenzte Wasserverdünnbarkeit, während Keton-Formaldehyd-Harze ein schlechtes pot-life-Verhalten zeigen und einen hohen Gehalt an Formaldehyd aufweisen.

Aufgabe der Erfindung ist es, ein Harz auf Basis von Keton-Formaldehyd-Kondensaten zur Verfügung zu stellen, das einen geringeren Formaldehydgehalt als die bekannten hat und das ein gutes pot-life-Verhalten aufweist. Weiterhin soll gute Wasserverdünnbarkeit und hohe Lagerstabilität des Harzes gewährleistet sein.

Die Aufgabe wird erfindungsgemäß gelöst mit einem Verfahren zur Herstellung von Mischkondensaten auf Basis von Keton-Formaldehyd-Harzen, wenn man Ketone mit Formaldehyd in wäßrigem Medium bei einem pH-Wert oberhalb von 8,5 im Molverhältnis 1 : 5,5 bis 6,5 bis zu einem Formaldehydgehalt in der Reaktionsmischung von etwa 4,0 Gew.-% oder darunter kondensiert und anschließend, bezogen auf 1 Mol Keton in der Reaktionsmischung, 0,15 bis 0,4 Mol Harnstoff zugibt und weiterkondensiert. Die so erhaltenen Harze werden in Mischung mit alkalisch aufgeschlossener Stärke als naßfester Klebstoff für Papier und Pappe verwendet.

Die Herstellung von Keton-Formaldehyd-Harzen ist bekannt, vgl. z. B. US-PS-2 626 934 oder US-PS-3 591 534. Als Keton verwendet man vorzugsweise Aceton. Außerdem kommen als Ketone beispielsweise Methylethylketon, Pentanon-3, Methylvinylketon und Mischungen aus solchen in Betracht. Die Kondensation erfolgt in wäßrigem Medium bei einem pH-Wert oberhalb von 8,5, vorzugsweise in dem Bereich von 9,0 bis 10,5. Das Molverhältnis von Keton zu Formaldehyd beträgt 1 : 5,5 bis 1 : 6,5, vorzugsweise 1 : 6. Der pH-Wert wird durch Zugabe von Basen, wie Natronlauge, Kalilauge, Soda, Pottasche, Kalziumoxid, Kalziumhydroxid oder Bariumhydroxid eingestellt. Die Temperatur bei der Kondensation kann in einem weiten Bereich schwanken, z. B. zwischen 50 und 85°C liegen. Vorzugsweise arbeitet man in dem Temperaturbereich von 60 bis 80°C. Die Kondensation ist nach 1,5 bis 4 Stunden beendet. Der Formaldehydgehalt der Reaktionsmischung beträgt dann etwa 4,0 Gew.-% oder liegt zum Teil auch darunter (z. B. zwischen 3,4 und 3,8 Gew.-%), vorzugsweise wird die Kondensation des Ketons mit Formaldehyd soweit geführt, daß der Formaldehydgehalt in der Reaktionsmischung 3,2 bis 3,8 Gew.-% beträgt. Dann setzt man, bezogen auf ein Mol Keton in der Reaktionsmischung, 0,15 bis 0,4 Mol Harnstoff zu und kondensiert weiter. Die Weiterkondensation kann direkt im Anschluß an die Kondensation des Ketons mit Formaldehyd erfolgen, ohne das Reaktionsgemisch vorher abzukühlen. Für die Weiterkondensation arbeitet man in dem Temperaturbereich von 60 bis 80°C und bei pH-Werten, wie bei der vorangegangenen Kondensationsstufe. Die weiterkondensation ist nach etwa 30 bis 60 Minuten beendet. Man erhält auf diese Weise eine wäßrige Lösung eines mit Harnstoff modifizierten Keton-Formaldehyd-Harzes, die einen Feststoffgehalt von 30 bis 70 Gew.-%, vorzugsweise 40 bis 60 % aufweisen kann. Die bei der Kondensation erhaltene wäßrige Lösung des Mischkondensates kann aufkonzentriert werden, z. B. durch Abdestillieren des überschüssigen Wassers im Vakuum oder auch bei Normaldruck. Das erfindungsgemäß hergestellte Mischkondensat hat einen niedrigen Formaldehydgehalt und ist unbegrenzt mit Wasser verdünnbar. Das Harz zeichnet sich durch ein gutes pot-life-Verhalten aus und weist eine hohe Lagerstabilität auf (mindestens 6 Monate bei Raumtemperatur).

Die mit Harnstoff modifizierten Keton-Formaldehyd-Harze werden in Mischung mit Stärke als naßfester Klebstoff zum Verkleben von Papier und Pappe, insbesondere zur Herstellung von Wellpappe, verwendet. Dazu stellt man Mischungen her, die als eine wesentliche Komponente 1 bis 40, vorzugsweise 5 bis 30 Gew.-% eines mit Harnstoff modifizierten Keton-Formaldehyd-Harzes enthalten und als zweite wesentliche Komponente 99 bis 60, vorzugsweise 95 bis 70 Gew.-% alkalisch aufgeschlossener Stärke. Die beiden wesentlichen Bestandteile des naßfesten Klebstoffs liegen als Gemisch im allgemeinen in wäßriger Lösung vor, die einen Feststoffgehalt von 20 bis 40 Gew.-% aufweisen kann. Die beiden wesentlichen Komponenten des naßfesten Klebstoffs können in beliebiger Reihenfolge miteinander gemischt werden. Der pH-Wert der wäßrigen Lösungen der naßfesten Klebstoffe beträgt 10 bis 13.

Die in den Beispielen angegebenen Teile sind Gewichtsteile, die Angaben in Prozent beziehen sich, sofern nichts anderes angegeben ist, auf das Gewicht der Stoffe. Die in der Anmeldung angegebenen Gehalte an Formaldehyd wurden nach der Sulfit-Methode von DeJong gemessen (DeJong) J.I., De Jorge, J., Receuil Trav. chim. Pays-Bas 71, 643-660 (1952)).

**Beispiel 1**

In einem mit einem Rührer und Zulaufgefäßen ausgestatteten Kessel wurden 273 Teile Wasser, 25 Teile Soda und 1010 Teile 40 %-iger wäßriger Formaldehyd vorgelegt und unter Rühren auf eine Temperatur von 40°C erwärmt. Dann setzte man 131 Teile Aceton zu und erhitzte das Reaktionsgemisch auf 80°C. Nachdem die Temperatur des Reaktionsgemisches 80°C erreicht hatte, setzte man im Verlauf von 1,5 Stunden bei dieser Temperatur insgesamt 10 Teile einer 25 %-igen wäßrigen Natronlauge zu. Man erhielt auf diese Weise ein Aceton-Formaldehyd-Harz, das einen Formaldehydgehalt von 3,6 Gew.-% hatte. Zu dieser Reaktionsmischung fügte man bei einer Temperatur von 75°C 33 Teile Harnstoff, rührte die Mischung 30 Minuten in dem Temperaturbereich von 70 bis 75°C und destillierte anschließend bei dieser Temperatur und einem Druck von 250 mbar 535 Teile Wasser ab. Das Reaktionsgemisch wurde dann noch 30 Minuten bei 80°C gerührt und anschließend durch Zusatz von Ameisensäure auf einen pH-Wert in dem Bereich von 6,0 bis 6,5 eingestellt und filtriert. Man erhielt 960 Teile einer 50,4 %-igen wäßrigen Harzlösung. Die Viskosität der Lösung betrug 25 mPas bei einer Temperatur von 20°C. Der Gehalt an freiem Formaldehyd betrug 0,45 Gew.-%.

**Vergleichsbeispiel 1**

Herstellung eines Aceton-Formaldehyd-Harzes gemäß Stand der Technik

In einem mit einem Rührer und Zulaufgefäßen versehenen Kessel wurden 350 Teile Wasser, 30 Teile wasserfreier Soda und 1288 Teile einer 40 %-igen wäßrigen Formaldehydlösung vorgelegt und nach Zugabe von 166 Teile Aceton auf 70°C erhitzt. Nachdem die Reaktionsmischung eine Temperatur von 70°C erreicht hatte, setzte man 16 Teile einer 25 %-igen wäßrigen Natronlauge innerhalb von 1,5 Stunden zu und rührte die Mischung bei der angegebenen Temperatur. Bei einem Druck von 240 mbar entfernte man dann daraus 700 Teile Wasser. Die Viskosität der Mischung betrug 20 mPas bei 20°C. Durch Zugabe von Ameisensäure wurde ein pH-Wert von 6,5 eingestellt und die Lösung filtriert. Man erhielt 1150 Teile einer 50,1 %-igen Harzlösung mit einem Formaldehydgehalt von 3,4 %.

**Vergleichsbeispiel 2**

Man verfährt wie im Beispiel 1 angegeben, setzt jedoch zur Weiterkondensation anstelle von 33 Teilen nur 28 Teile Harnstoff zu. Es wurde ein mit Harnstoff modifiziertes Keton-Formaldehyd-Harz erhalten, das einen Formaldehydgehalt von 0,62 % hatte.

Herstellung von naßfesten Klebstoffen und deren Verwendung zum Verkleben von Wellpappe

Zur Herstellung des Klebstoffes sind die nach bekannten Verfahren gewonnenen Stärken, z. B. Fertigstärken und Stärken aus direktem Aufschluß unter Druck unter Verwendung geeigneter Hilfsstoffe, wie Peroxiden etc. einsetzbar.
Allgemeine Rezeptur zur Herstellung des Klebstoffs z. B. nach dem Steinhall-Verfahren:
355 Teile Wasser von 60°C, 32,5 Teile Stärke und 5 Teile Ätznatron werden zusammengegeben und 30 min bei 50 bis 60°C gerührt.
520 Teile Wasser von 25°C, 217,5 Teile Stärke und 4 Teile Borax werden zugesetzt und 30 min gerührt. Anschließend werden jeweils 20 Teile der oben beschriebenen wäßrigen Harzlösung zugesetzt und weitere 20 min bei RT gerührt.

Herstellung von Verklebungen für die Prüfung von wasserfesten Wellpappeverklebungen nach Fefco-Test Nr. 9

1. Aufstrich des Leimes auf eine Glasplatte mit dem 0,35 mm Abstandsrakel.
2. Übernahme des Leimes von der Glasplatte auf eine vorgefertigte, einseitig wasserfest verklebte Wellpappe und Auflegen der Oberdecke (Natronkraftpapier) Größe der Verklebung: 20 x 20 cm.
3. Zwischen zwei Preßplatten wird die Verklebung in eine Presse geschoben und ohne Druck 10 sec. bei 120°C verkleistert. Die Wärmezufuhr geschieht einseitig auf die zu verkleisternde Seite. Danach Preßplatten aus der Presse holen und nach weiteren 10 sec. kommt die Verklebung aus den Preßplatten.
4. Anschließend 3 Stunden Lagerung der Verklebung bei +50°C und 90 bis 95 % Luftfeuchtigkeit. Nach dieser Zeit werden die Verklebungen bei Raumtemperatur (meistens über Nacht) getrocknet und nach der Vorschrift des Fefco-Test Nr. 9 vorbereitet und geprüft.

Die Ergebnisse sind in der Tabelle zusammengestellt. Die Prüfung des pot-life-Verhaltens erfolgte durch Messung der Viskosität des Klebstoffansatzes, der 3 Stunden bei einer Temperatur von 35°C gerührt wurde. Die Viskositätsmessung wurde in einem Ford-Becher 4 in Sekunden ermittelt.

**Tabelle 1**

| Harz gemäß | Auslaufzeit alkalisch aufgeschlossener Stärke ohne Harzzusatz | | Auslaufzeit der Klebsoffmischung mit Harz | |
|---|---|---|---|---|
| | 10' gerührt 1450 U/min | 1 Tag gerührt 1450 U/min | 10' gerührt 1450 U/min | 3 h gerührt bei 35°C 250 U/min |
| Beispiel | | | 33'' | 82'' |
| Vergleichsbeispiel 1 | | | 32'' | geliert, nicht mehr meßbar |
| 2 | | | 35'' | geliert, nicht mehr meßbar |
| Harnstoff-Formaldehyd-Harz nach Stand der Technik | | | 35'' | 31'' |
| Abmischung aus 4 Teilen Harz nach Vergleichsbeispiel 1 und 0,5 Teilen Harnstoff-Formaldehyd-Harz nach Stand der Technik | | | 33'' | 51'' |
| | 33'' | 49'' | | |

**Tabelle 2**

| Harz gemäß | Wasserverdünnbarkeit | Lagerstabilität | Dauer der Verklebung nac Fefco-Test Nr. 9 bei 110°C Preßtemperatur | |
|---|---|---|---|---|
| Beispiel 1 | 1 : ∞ | > 6 Monate | > 56 h | < 72 h |
| Vergleichsbeispiel 1 | 1 : ∞ | > 6 Monate | > 56 h | < 72 h |
| Harnstoff-Formaldehyd-Harz nach Stand der Technik | 1 : 0,8 - 1,0 bei Abmischung tritt Eintrübung ein, bei weiterer Wasserzugabe erfolgt Ausflockung von Harzbestandteilen | 8 bis 12 Wochen | > 56 h | < 72 h |
| Abmischung aus 4 Teilen Harz nach Vergleichsbeispiel 1 und 0,5 Teilen Harnstoff-Formaldehyd-Harz nach Stand der Technik | | < 1 Woche | > 56 h | < 72 h |

## Patentansprüche

1. Verfahren zur Herstellung von Mischkondensaten auf Basis von Keton-Formaldehyd-Harzen, dadurch gekennzeichnet, daß man Keton mit Formaldehyd in wäßrigem Medium bei einem pH-Wert oberhalb 8,5 im Molverhältnis 1 : 5,5 bis 6,5 bis zu einem Formaldehydgehalt in der Reaktionsmischung von etwa 4,0 Gew.-% oder darunter kondensiert und anschließend, bezogen auf ein Mol Keton in der Reaktionsmischung, 0,15 bis 0,40 Mol Harnstoff zugibt und weiterkondensiert.

2. Verwendung der nach Anspruch 1 erhaltenen Mischkondensate zur Herstellung von naßfesten Klebstoffen auf Basis von Stärke zum Verkleben von Papier und Pappe.

## Claims

1. A process for preparing a cocondensate based on a ketone-formaldehyde resin, which comprises condensing a ketone with formaldehyde in an aqueous medium at a pH above 8.5 in a molar ratio of from 1 : 5.5

4

# EP 0 100 497 B1

to 6.5 until the formaldehyde content in the reaction mixture is about 4.0 % by weight or less and then adding from 0.15 to 0.40 mole of urea per mole of ketone in the reaction mixture and continuing the condensation.

2. Use of a cocondensate obtained as claimed in claim 1 for preparing a starch-based adhesive of high wet strength for the adhesive bonding of paper and paperboard.

## Revendications

1. Procédé de préparation de co-condensats à base de résines cétone-formaldéhyde, caractérisé en ce que l'on condense la cétone et le formaldéhyde dans un rapport molaire de 1 : 5,5 à 1 : 6,5 dans un milieu aqueux, à un pH supérieur à 8,5, jusqu'à une teneur du mélange réactionnel en formaldéhyde d'environ 4,0 % en poids ou moins, on ajoute ensuite entre 0,15 et 0,40 mole d'urée par mole de cétone contenue dans le mélange réactionnel, puis on poursuit la condensation.

2. Utilisation des co-condensats préparés selon la revendication 1 pour la préparation de colles résistant à l'humidité à base d'amidon pour le collage de papier et de carton.